# EUROPEAN PATENT SPECIFICATION

(11) **EP 1 056 966 B1**
(45) Date of publication and mention of the grant of the patent: **02.01.2004**
(21) Application number: 99915523.7
(22) Date of filing: 16.02.1999
(51) Int. Cl.: F16K 17/08, G05D 16/06

(54) **CONTROL VALVE CONTROLLING THE FLOW OF A GAS ACCORDING TO ITS PRESSURE**
DRUCKGESTEUERTES DURCHFLUSS- GASREGELVENTIL
CLAPET SERVANT A REGULER L'ECOULEMENT D'UN GAZ EN FONCTION DE SA PRESSION

(30) Priority: 18.02.1998 FR 9801952
(43) Date of publication of application: 06.12.2000
(73) Proprietor: SHELL INTERNATIONALE RESEARCH MAATSCHAPPIJ B.V., 2596 HR Den Haag (NL)
(72) Inventor: BEAUDOUIN, Jean-Claude, F-76530 Grand Couronne (FR)
(86) International application number: PCT/EP1999/001004
(87) International publication number: WO 1999/042750

(56) References cited:
- CH-A- 527 464
- DE-A- 2 628 238
- FR-A- 1 250 997
- GB-A- 884 558
- US-A- 3 273 590

## Description

The present invention relates to a control valve designed to be connected to a conduit for passing GPG from a tank to provide a pressure drop if the pressure of the GPG is below a reference value and a much smaller pressure drop if the pressure of the GPG is above a reference value.

Such a control valve can be used to control a vaporizer for liquefied petroleum gas, such as propane, that is associated with a tank for liquefied petroleum gas. The abbreviation LPG will be used to refer to the liquid phase of the product and the abbreviation GPG will be used to refer to the gaseous phase of the product.

A tank for LPG with a vaporizer is discussed in French patent specification No. 2 706 580, in particular with reference to Figure 3. The known tank comprises an outlet for GPG that is connected by means of a conduit to an appliance, such as a burner of a central heating system. It will be appreciated that when the pressure in the tank drops, the GPG supply to the appliance can be adversely affected. In order to maintain the gas flow rate, LPG is vaporized in the vaporizer and the vaporized LPG is supplied to the conduit that connects the tank to the appliance.

The vaporizer can only work if LPG can be drawn into the vaporizer from the tank, and this can only happen if the pressure of gas in the vaporizer is less than the pressure of gas in the tank. In the French publication a control device is described that has an upstream end that is in fluid communication with the outlet for gas of the tank and a downstream end that is in fluid communication with the conduit that is connected to the appliance. The outlet for gas of the vaporizer is connected to the downstream end of the control valve.

The known control device is an assembly which comprises in parallel a calibrated restriction referred to with reference numeral 43 and a discharge valve which is calibrated to a predetermined pressure, referred to with reference numeral 48, such that
- as long as the pressure of the GPG is less than the reference pressure, the GPG only flows through the calibrated restriction by undergoing a pressure drop under conditions allowing the operation of the vaporizer through the supply of LPG to the latter, and
- when the actual pressure of the GPG reaches or exceeds the reference pressure, the discharge valve permits the flow of the GPG more freely than through the calibrated restriction, so that the pressure of the GPG downstream of the calibrated restriction is higher, resulting in the interruption of the operation of the vaporizer because the LPG cannot be supplied.

Therefore, the vaporizer can only function when the pressure of the GPG in the tank is less than the set point, that is to say when there is an actual need for GPG.

This assembly has been satisfactorily applied, however, its production involves assembling several components in parallel and this turned out to be expensive in terms of materials and man-hours, in particular since it requires several gas-tight connections.

The purpose of the present invention is to simplify the control function, thereto Applicant proposes to replace the known control device by the control valve according to the present invention.

To this end the control valve designed to be connected to a conduit for passing GPG from a tank to provide a pressure drop if the pressure of the GPG is below a reference value and a much smaller pressure drop if the pressure of the GPG is above a reference value according to the present invention comprises:
- a housing having an inlet opening and an outlet opening, a cavity having a cavity inlet in fluid communication with the inlet opening and a cavity outlet in fluid communication with the outlet opening and an annular valve seat positioned inside the cavity around the cavity inlet,
- a valve body arranged moveably inside the cavity between a throttling position in which the valve body is pressed against the annular valve seat and an open position in which the valve body is moved away from the annular valve seat,
- resilient means to press the valve body in the direction of the annular valve seat, in such a way that the valve body occupies the throttling position when the actual gas pressure is less than a reference pressure and the open position when the actual gas pressure is at least equal to the reference pressure, wherein the valve body has a passage with a calibrated orifice which, when the valve body occupies the throttling first position allows calibrated fluid communication between the cavity inlet and the cavity outlet, and in that the resilient means comprises a completely sealed bellows positioned inside the cavity, which bellows contains a control gas and can be deformed longitudinally and elastically, from a first state of longitudinal compression that it presents when the valve body occupies the throttling position and in which the control gas has a pressure determined according to the reference pressure, to a second state of longitudinal compression that it presents when the valve body occupies the open position and in which the bellows is compressed by a higher GPG pressure.

In this respect, the resistance of the bellows to length changes is the result of the effect of the elastic stiffness inherent to the bellows and of the pressure of the control gas contained in the bellows.

Reference is made to USA patent specification No. 3 273 590. This publication discloses a control valve designed to have a slow opening characteristic. The known control valve comprises a housing provided with a cavity having a cavity inlet and two cavity outlets each provided with a calibrated restriction and an annular valve seat positioned around the second cavity outlet; a valve body arranged moveably inside the cavity between a throttling position in which the valve body is pressed against the annular valve seat and an open position in which the valve body is moved away from the annular valve seat; a bellows to press the valve body in the direction of the annular valve seat, in such a way that the valve body occupies the throttling position when the actual gas pressure is less than a reference pressure and the open position when the actual gas pressure is at least equal to the reference pressure, wherein the valve body comprises two annular lands which can provide a seal with the valve seat, and wherein the valve body has a passage extending between the annular space between the lands and the interior of the bellows to provide the slow opening characteristics.

This publication, however, is not relevant to the present invention because the known valve is designed to provide an increasing pressure drop with increasing flow rate.

The control valve of the present invention comprises only a limited number of components, and the only gas-tight connections that must be made are the connections of the inlet and the outlet to the GPG conduit. Thus it is easier and more economical to produce and safer than the assembly described in the French patent although it fulfils the same function.

It should be noted, however, that the scope of application of this control valve is not limited to integration in an installation which includes an LPG tank and an LPG vaporizer, under the conditions described in the above-mentioned French patent, and that it may have further applications without going beyond the framework of the present invention.

Suitably, the cavity includes means to support the end of the tight bellows that is not in contact with the valve body.

Suitably, the control valve further comprises means to keep the valve body in contact with the tight bellows.

Suitably, the means to press the valve body elastically to the tight bellows comprises a helical spring.

Suitably, the valve body comprises a cap, having a bottom wall, a tubular side wall and an outwardly projecting annular top wall, and in that the helical spring is fitted around the tubular side wall.

The passage in the valve body may include at least one slot in the tubular side wall.

The valve body and the cavity suitably have the means to guide the valve body.

According to an arrangement, referred to as the "T" arrangement, the annular valve seat with the cavity inlet, the valve body with the calibrated orifice and the tight bellows are aligned along a longitudinal axis, wherein the inlet opening and the outlet opening are aligned along a transversal axis, wherein the inlet opening leads transversally and directly upstream of the cavity inlet in reference to the direction and wherein the outlet opening leads transversally to a zone of the cavity of the housing placed directly downstream of the annular valve seat in reference to the direction.

According to another arrangement ("in-line" arrangement), the inlet opening, the annular valve seat with the cavity inlet, the valve body with the calibrated orifice, the tight bellows and the outlet opening are aligned along a longitudinal axis and that the valve body and the tight bellows leave free inside the cavity a passage for the flow of gas from the inlet opening to the outlet opening, downstream of the annular valve seat, which passage is at least equal in size to the passage that is associated with the valve body being in the open position.

The control valve can further comprise means to adjust the pressure of the control gas in the bellows.

Due in particular to spatial imperatives, several different arrangements of the various components of the control valve according to the invention can be envisaged.

In the specification the words 'tight bellows' is used to refer to completely sealed bellows.

The invention will now be described by way of example in more detail with reference to the accompanying drawing, wherein
Figure 1 shows a cross-sectional view of a control valve according to the invention in the "T" arrangement; and
Figure 2 shows a cross-sectional view of a control valve according to the invention in the "in-line" arrangement.

In both cases, the plane of drawing constitutes a plane of symmetry for the entire control valve.

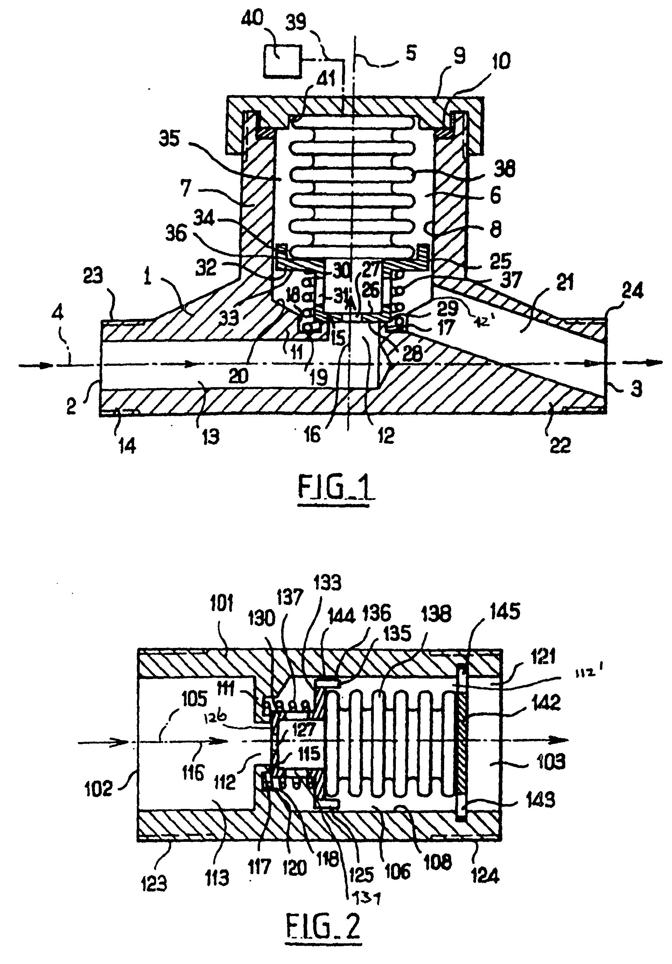

Reference will now be made to Figure 1 where 1 represents a sealed housing of the control valve, which housing 1 has an inlet opening 2 for the GPG and an outlet opening 3. During normal operation, the gas flows through the housing 1 of the control valve in a controlled manner according to its actual pressure at this inlet opening 2 to the outlet opening 3 for the GPG.

The inlet opening 2 and the outlet opening 3 are arranged along the axis 4 which, in this example, is horizontal but which may be in any other orientation without going beyond the framework of the present invention. The inlet opening 2 and the outlet opening 3 are mutually symmetrical in relation to another axis 5, perpendicular to axis 4 and subsequently serving as a longitudinal reference.

The housing 1 further comprises a sealed tubular wall 7, revolving around the axis 5, delimiting a cavity 6 by an inner surface 8 revolving around this axis 5. The tubular wall 7 and the cavity 6 are shifted in relation to axis 4, namely towards the top in the illustrated example in which the longitudinal axis 5 is vertical. The cavity 6 is in addition sealingly delimited by a transversal cover 9 secured to the tubular wall 7, for example by screws with inserted packing 10. At the other end, the cavity 6 is delimited by a bottom wall 11. A cavity inlet 12 for the flow of the GPG from the inlet opening 2 is located in the bottom wall. The inlet opening 2 is in fluid communication with the cavity inlet 12 by means of supply conduit 13 arranged in the housing 1 along axis 4. Supply conduit 13 provides the GPG with a flow section that is substantially equal to that of the cavity inlet 12. The term 'flow section' is used to refer to the area available for gas flow perpendicular to the direction of flow.

The cavity is furthermore provided with a cavity outlet 12', which is in fluid communication with the outlet opening 3 for the GPG by means of discharge conduit 21. The discharge conduit 21 provides a flow section which is substantially equal to that of the supply conduit 13.

Within the cavity 6, i.e. towards the top in the illustrated example, the cavity inlet 12 is edged peripherally on all sides by an annular valve seat 15 which is annular and revolves around axis 5, and, for example, a flat shape perpendicular to this axis 5.

The annular valve seat 15 comprises a ring extending upwards from the bottom wall 11. Around the annular valve seat 15 an annular throat 19 is located defined by a bottom edge 17 and an inner surface 18. The inner surface 18 is itself connected, moving away in relation to axis 4, to the inner surface 8 of the cavity 6 by a truncated surface 20 revolving around axis 5 and widening towards the inner surface 18 and towards the inner surface 8, it being understood that the latter defines the cavity 6 on most of the longitudinal dimension between the bottom edge 17 and the cover 9.

Advantageously, the tubular end fittings 14 and 22 provide a means of facilitating the sealed assembly of the housing 1 in a conduit (not shown) which carries the GPG of which the flow is to be controlled. To this end the end fittings 14 and 22 are provided with threads 23 or 24.

Immediately downstream of the annular valve seat 15 in reference to direction 16, the cavity 6 contains a valve body 25 slideably arranged in the cavity 6 between a position illustrated in which it is in contact with the annular valve seat 15 and at least a non-illustrated position in which it is distanced longitudinally away from the annular valve seat 15.

The valve body 25 is generally in the shape of a cap, having a bottom wall 26, a tubular side wall 30 and an outwardly projecting annular top wall 32 provided with an upwardly projecting rim 34.

The valve body 25 includes a passage with a calibrated orifice 27. The inner diameter of the calibrated orifice 27 is smaller than that of the cavity inlet 12 in order to provide the gas from the inlet opening 2 with a flow section narrowed in relation to that provided by the cavity inlet 12 and the supply conduit 13. The calibrated orifice 27 is arranged in the bottom wall 26 that is delimited by a flat lower surface 28. The bottom wall has a circular periphery 29 having a diameter larger than that of the cavity inlet 12 and smaller than that of the inner surface 18 of the cavity 6. In the position shown in Figure 1, the lower surface 28 is in contact with the valve seat 15.

The tubular side wall 30 has an inner diameter that is larger than the inner diameter of the calibrated orifice 27 and an outer diameter that is substantially equal to the diameter of the circular periphery 29. The passage through the valve body 25 extends from the calibrated orifice via the interior defined by the tubular side wall 30 to slots 31 arranged in the tubular side wall 30. The slots 31 provide the GPG from the inlet opening 2 with a flow section larger than that of the calibrated orifice 27.

The diameter of the cylindrical outer surface 36 of the upwardly projecting rim 34 is about equal to that of the inner surface 8 of the cavity 6 in such a way that the surfaces 36 and 8 together define the guiding surfaces of the valve body 25 in longitudinal sliding motion in the cavity 6. However, the diameter of the cylindrical outer surface 36 is smaller than that of the inner surface 8 in order to leave between the upwardly projecting rim 34 and the tubular wall 7 a non-referenced gap. The gap prevents the creation of tightness between the valve body 25 and the tubular wall 7 and permits equalizing the pressures of the zones of the cavity 6 on both sides of the valve body 25.

Around the tubular side wall 30 of the valve body 25 a longitudinal helical spring 37 is arranged. The helical spring 37 is supported by the bottom edge 17 and by the lower surface 33 of the outwardly projecting annular top wall 32. The helical spring 37 thus exerts a small force on the valve body 25 in order to move it to an open position away from the cavity inlet 12. In this position the valve body 25 defines with the cavity inlet 12 a flow section that supplements the flow section offered by the calibrated orifice 27, and the sum of these two flow sections should be such that it is at least equal to the flow section offered by the supply conduit 13, the cavity inlet 12 and the discharge conduit 21.

However, the movement of the valve body 25 to an open position is opposed elastically by a resilient means in the form of a tight bellows 38 fitted longitudinally between the valve body 25, and more precisely the outwardly projecting annular top wall 32 of the same, and the cover 9 in order to rest on the first upstream and on the second downstream, in reference to direction 16.

The upwardly projecting rim 34 of the valve body 25 defines an annular region 35 between the inner surface 8 of the tubular wall 7 and the outer surface of the bellows 38. The helical spring 37 exerts a small force on the valve body 25 in order to keep the valve body 25 in contact with the bellows 38 when the bellows 38 is compressed.

The bellows 38 is made of a corrugated steel tube closed at both ends that includes transversal annular undulations, revolving around axis 5. The bellows 38 contains a control gas, such as air. The elastic stiffness of the bellows 38 and pressure of the control gas tend to cause the longitudinal extension of the bellows 38 and tend to resist its longitudinal compression by the effect of the pressure of the GPG. When the valve body 25 occupies the illustrated position in which it is resting upstream, in reference to direction 16, on the annular valve seat 15, the bellows 38 is pre-stressed under elastic longitudinal compression between the valve body 25 and the cover 9, which corresponds for the bellows 38 to a state of maximum elastic extension. In this state, the control gas contained in the bellows 38 has a predetermined pressure which depends on a reference pressure selected in such a way that, together with the elastic stiffness of the bellows 38, and taking into account the force exerted on the valve body 25 by the pressure drop encountered by the GPG flowing through the calibrated orifice 27:
- if the actual pressure of the GPG at the inlet opening 2 is less than this reference pressure, the valve body 25, under the combined effect of the bellows 38 and of the helical spring 37, which is generally negligible in this respect, occupies its throttling position of the cavity inlet 12 illustrated in Figure 1, in which position the GFG flowing through the inlet opening 2 must go through the calibrated orifice 27 to reach the outlet opening 3 through slots and undergoes while flowing through the calibrated orifice 27 a predetermined pressure drop; and
- if the actual pressure of gas at the inlet opening 2 reaches or exceeds this set point, the effect of the over pressure on the bellows 38 causes a longitudinal compression of the bellows 38, and thus allows the valve body 25 to obtain an open position of the cavity inlet 12 (not illustrated) in which it lets the gas flow freely, that is, without a significant pressure drop between the inlet opening 2 and the outlet opening 3, essentially between the annular valve seat 15 and the lower surface 28 of the wall 26 and partly through the calibrated orifice 27.

Of course, in both cases, the flow of the GPG through the calibrated orifice 27 is followed by a flow through the slots 31 of the tubular side wall 30, which, however, will not impose an additional pressure drop on the GPG.

The reference pressure, which is determined by the bellows 38 in the position of the valve body 25 corresponding to the throttling of the cavity inlet 12 if we ignore the presence of the calibrated orifice 27, can be selected once and for all. However, according to the applications of the device according to the invention, one might also envisage the possibility of adjusting the pressure of the control gas inside the bellows 38. This can be done by connecting the bellows 38, by a pipe 39 going through the cover 9, for example along axis 5, with suitable means 40, which are external to the housing 1 of the valve and known to a skilled person.

It can be observed that the mode of cooperation of the bellows 38 with the valve body 25, on the one hand, and with the cover 9, on the other hand, is a simple longitudinal support, respectively upstream and downstream in reference to direction 16; in other words, no means are envisaged other than the interplay of loads exerted on the valve body 25 by the bellows 38, on the one hand, the helical spring 37 and the gas flowing through the inlet opening 2, on the other hand, to provide this support. Preferably, however, means are also provided to centre the bellows 38, in reference to axis 5, in relation to the valve body 25 and the cover 9; to this end, the bellows 38 slots into the upwardly projecting rim 34 at the level of the valve body 25 and similarly slots into an annular shoulder 41, revolving around axis 5, which the cover 9 presents towards the inside of the cavity 6.

The control valve illustrated in Figure 1 can have a relative compactness in the transversal direction of axis 4, i.e. in the direction of the conduit in which the control valve must be inserted, and certain spatial dimensions in the longitudinal direction of axis 5, i.e. laterally in relation to the conduit.

For machining reasons, the axis 5 can also be inclined at an angle of 45° in order that the discharge conduit 21 is arranged along axis 4.

Depending on the conditions of fitting, another arrangement of the components of the control valve according to the invention can be selected (illustrated in Figure 2), in which the spatial dimensions of the control valve, laterally in relation to the conduit in which it is inserted, do not exceed the spatial dimensions of the latter; on the other hand, the spatial dimensions of the control valve in the direction of the conduit are generally greater than when the arrangement illustrated in Figure 1 is adopted.

In Figure 2, to which we will now refer, the same essential components as in Figure 1 are to be found, and we have used in Figure 2 the same references as in Figure 1 incremented by 100 to indicate identical or corresponding components.

The control valve illustrated in Figure 2 comprises a sealed tubular housing 101 revolving around a longitudinal axis 105 which, in this example, is common to the conduit (not shown) into which the control valve must fit, i.e. in particular at an inlet opening 102 of the GPG of the housing 101 and at an outlet opening 103 of the GPG in this housing 101, around which the latter presents arrangements such as thread 123 or 124 for connection to the conduit.

Within the housing 101, the inlet opening 102 is extended longitudinally, i.e. coaxially, by a supply conduit 113 to a bottom wall 111 which, in reference to the longitudinal axis 105, has the same configuration as the bottom wall 11 in relation to the longitudinal axis 5 and, in particular, defines around axis 105 an opening 112 which is identical in all respects to the cavity inlet 12 except that it is placed directly at the inlet opening 102 according to axis 105 and is delimited, in the illustrated example, by a non-referenced inner peripheral face, which is cylindrical and revolves around the axis 105 but has a diameter less than that of the inner peripheral face (also not referenced) of the supply conduit 113 which, for example, is also cylindrical and revolves around axis 105.

In the downstream direction in reference to direction 116 of the flow of the GPG inside the opening 112, from the inlet opening 102 to the outlet opening 103, the bottom wall 111 is adjacent to a cavity 106 which is identical in all respects to the cavity 6 except that it is delimited by an inner surface 108 which, revolving around axis 105, is consequently in this example coaxial with the inlet opening 102 and the outlet opening 103.

In the downstream direction in reference to direction 116, i.e. towards the cavity 106, the bottom wall 111 (indicated by references 115, 117, 118 and 120) features the components described under references 15, 17, 18 and 20 in reference to Figure 1, in a correlation with respect to axis 116 and the inner surface 108 of the cavity 106 which is identical to the correlations previously described with respect to direction 16 and the inner surface 8 of the cavity 6.

Similarly, inside the cavity 106, in an identical correlation to that of the corresponding components inside the cavity 6, there is a valve body 125, which is identical in all respects to the valve body 25, with one exception that will be described below, a spring 137, which is identical in all respects to the helical spring 37, supported longitudinally, on the one hand, by the edge 117 of the seat 115 and, on the other hand, by the lower surface 133 of the valve body 125, around the tubular side wall 130 of the latter, and a tight bellows 138 which is identical in all respects to the bellows 38 but supported downstream in reference to direction 116 by the housing 101, not by a cover similar to the cover 9, but by a transversal support clip 142 advantageously attached to the housing 101 by notches 145 in an annular throat 143, revolving around axis 105, set in the tubular wall of the housing 101 at a longitudinal distance from the seat 115 which corresponds to the distance longitudinally separating the seat 15 from the cover 9 of the housing 1 of the control valve illustrated in Figure 1. This throat 143 constitutes the cavity outlet 112' and forms the transition between the inner surface 108 of the cavity 106 and an inner surface directly extending this inner surface 108 and delimiting inside the housing 101, in the direct longitudinal extension of the supply conduit 113 and the cavity 106, a discharge conduit 121 leading to the outlet opening 103 for the GPG.

A skilled person will easily understand that the operation of this version of the control valve according to the invention is identical in ail respects to that of the version described in reference to Figure 1.

In order that, when the valve body 125 occupies its open position of the opening 112, neither the valve body 125 nor the support clip 142 constitutes a significant obstacle to the flow of gas in the inlet opening 102 towards the outlet opening 103, longitudinal notches 144 and 145 are arranged longitudinally respectively in the outer peripheral face 136 of the edging 135 of the valve body 125 and in a peripheral zone of the clip 142, directly adjacent to the inner surface 108 of the cavity 106, in such a way that these notches 144 and 145, in addition to a non-referenced gap remaining between the bellows 138 and the inner surface 108 of the cavity 106, offer a flow section at least equal to that which is offered cumulatively by the calibrated orifice 127 of the valve body 125 and the space provided by the latter vis-à-vis the seat 115 when the valve body 12.5 occupies its open position of the opening 112.

Of course, in this case as in the case of the control valve illustrated in Figure 1, certain means (this time not shown) may be envisaged to adjust the predetermined pressure which is that of the control gas inside the bellows 138 when the latter occupies its maximum expansion position in which it forces the valve body 125 against the seat 115 in order to allow the adjustment of the reference pressure which defines the actual pressure of the GPG at the inlet opening 102 below which the valve body 125 maintains its throttling position of the opening 112, i.e. for the compulsory flow of GPG through the calibrated orifice 127 towards the outlet opening 103, and from which the valve body 125 adopts its open position of the opening 112 and for the release of the flow of the GFG from the inlet opening 102 co the outlet opening 103.

A skilled person will easily understand that the two modes of implementation of the invention which have just been described are merely examples based on which numerous variants can be designed without going beyond the scope of the present invention as defined by the appended claims.

## Claims

1. Control valve designed to be connected to a conduit for passing GPG from a tank to provide a pressure drop if the pressure of the GPG is below a reference value and a much smaller pressure drop if the pressure of the GPG is above a reference value, which control valve comprises:
- a housing (1,101) having an inlet opening (2,102) and an outlet opening (3,103), a cavity (6,106) having a cavity inlet (12,112) in fluid communication with the inlet opening (2,102) and a cavity outlet (12',112') in fluid communication with the outlet opening (3,103) and an annular valve seat (15,115) positioned inside the cavity (6,106),
- a valve body (25,125) arranged moveably inside the cavity (6,106) between a throttling position in which the valve body (25,125) is pressed against the annular valve seat (15,115) and an open position in which the valve body (25,125) is moved away from the annular valve seat (15,115),
- resilient means (38,138) to press the valve body (25,125) in the direction of the annular valve seat (15,115), in such a way that the valve body (25,125) occupies the throttling position when the actual gas pressure is less than a reference pressure and the open position when the actual gas pressure is at least equal to the reference pressure,
**characterized in that** the annular valve seat (15,115) is positioned around the cavity inlet (12,112), **in that** the valve body (25,125) has a passage with a calibrated orifice (27,127) which, when the valve body (25,125) occupies the throttling first position allows calibrated fluid communication between the cavity inlet (12,112) and the cavity outlet (12',112'), and **in that** the resilient means (38,138) comprises a completely sealed bellows (38,138) positioned inside the cavity (6,106), which bellows (38,138) contains a control gas and can be deformed longitudinally and elastically, from a first state of longitudinal compression that it presents when the valve body (25,125) occupies the throttling position and in which the control gas has a pressure determined according to the reference pressure, to a second state of longitudinal compression that it presents when the valve body (25,125) occupies the open position and in which the bellows (38,138) is compressed by a higher GPG pressure.

2. Control valve according to claim 1, wherein the cavity (6,106) includes means (9,142) to support the end of the completely sealed bellows (38,138) that is not in contact with the valve body (25,125).

3. Control valve according to claim 2, which further comprises means (37,137) to keep the valve body (25,125) in contact with the completely sealed bellows (38,138).

4. Control valve according to claim 3, wherein the means (37,137) to press the valve body (25,125) elastically to the completely sealed bellows (38,138) comprises a helical spring (37,137).

5. Control valve according to claim 4, wherein the valve body (25,125) comprises a cap, having a bottom wall (26,126), a tubular side wall (30,130) and an outwardly projecting annular top wall (32,132), and in that the helical spring (37,137) is fitted around the tubular side wall (30,130).

6. Control valve according to claim 5, wherein the passage in the valve body (25,125) includes at least one slot (31,131) in the tubular side wall (30,130).

7. Control valve according to any of the claims 1 to 6, wherein the valve body (25,125) and the cavity (6,106) have the means (36,8,136,108) to guide the valve body (25,125).

8. Control valve according to any of the claims 1 to 7, wherein the annular valve seat (15) with the cavity inlet (12), the valve body (25) with the calibrated orifice (27) and the completely sealed bellows (38) are aligned along a longitudinal axis (5), wherein the inlet opening (2) and the outlet opening (3) are aligned along a transversal axis (4), wherein the inlet opening (2) leads transversally and directly upstream of the cavity inlet (12) in reference to the direction (16) and wherein the outlet opening (3) leads transversally to a zone of the cavity (6) of the housing (1) placed directly downstream of the annular valve seat (15) in reference to the direction (16).

9. Control valve according to any one of the claims 1 to 7, wherein the inlet opening (102), the annular valve seat (115) with the cavity inlet (112), the valve body (125) with the calibrated orifice (127), the completely sealed bellows (138) and the outlet opening (103) are aligned along a longitudinal axis (105) and in that the valve body (125) and the tight bellows (138) leave free inside the cavity (106) a passage for the flow of gas from the inlet opening (102) to the outlet opening (103), downstream of the annular valve seat (115), which passage is at least equal in size to the passage that is associated with the valve body (25,125) being in the open position.

10. Control valve according to any one of the claims 1 to 9, which further comprises means (39,40) to adjust the pressure of the control gas in the completely sealed bellows (38,138).

## Patentansprüche

1. Regelventil, das mit einer Leitung zur Führung von GPG aus einem Tank verbindbar ist, um einen Druckabfall zu bewirken, wenn der Druck des GPG unterhalb eines Referenzwertes liegt, und einen wesentlich kleineren Druckabfall, wenn der Druck des GPG oberhalb des Referenzwertes liegt, wobei das Regelventil aufweist:
- ein Gehäuse (1, 101) mit einer Einlaßöffnung (2, 102) und einer Auslaßöffnung (3, 103), einen Hohlraum (6, 106) mit einem Hohlraumeinlaß (12, 112) in Fluidverbindung mit der Einlaßöffnung (2, 102) und einem Hohlraumauslaß (12', 112') in Fluidverbindung mit der Auslaßöffnung (3, 103) sowie einem ringförmigen Ventilsitz (15, 115), der innerhalb des Hohlraumes (6, 106) angeordnet ist,
- einen Ventilkörper (25, 125), der innerhalb des Hohlraumes (6, 106) zwischen einer Drosselstellung, in welcher der Ventilkörper (25, 125) gegen den ringförmigen Ventilsitz (15, 115) gedrückt wird, und einer Offenstellung bewegbar ist, in welcher der Ventilkörper (25, 125) von dem ringförmigen Ventilsitz (15, 115) weg bewegt ist,
- elastische Mittel (38, 138), um den Ventilkörper (25, 125) in Richtung des ringförmigen Ventilsitzes (15, 115) zu drücken, derart, daß der Ventilkörper (25, 125) die Drosselstellung einnimmt, wenn der tatsächliche Gasdruck kleiner als der Referenzdruck ist, und die Offenstellung, wenn der tatsächliche Gasdruck zumindest gleich dem Referenzdruck ist,
**dadurch gekennzeichnet, daß** der ringförmige Ventilsitz (15, 115) um den Hohlraumeinlaß (12, 112) herum angeordnet ist, daß der Ventilkörper (25, 125) einen Durchgang mit einer kalibrierten Öffnung (27, 127) hat, die, wenn der Ventilkörper (25, 125) die erste Drosselstellung einnimmt, es gestattet, daß eine kalibrierte Fluidverbindung zwischen dem Hohlraumeinlaß (12, 112) und dem Hohlraumauslaß (12', 112') vorhanden ist, und daß die elastischen Mittel (38, 138) einen vollständig abgedichteten Balgen (38, 138) aufweisen, der innerhalb des Hohlraumes (6, 106) angeordnet ist, wobei der Balgen (38, 138) ein Regelgas enthält und in der Längsrichtung sowie elastisch verformbar ist, aus einem ersten Zustand der Längskompression, die vorliegt, wenn der Ventilkörper (25, 125) die Drosselstellung einnimmt, und in welcher das Regelgas einen Druck hat, der durch den Referenzdruck bestimmt wird, in einen zweiten Zustand der Längskompression, der vorliegt, wenn der Ventilkörper (25, 125) die Offenstellung einnimmt, und in welcher der Balgen (38, 138) durch einen höheren GPG-Druck komprimiert wird.

2. Regelventil nach Anspruch 1, bei welchem der Hohlraum (6, 106) Mittel (9, 142) zum Abstützen des nicht in Berührung mit dem Ventilkörper (25, 125) stehenden Endes des vollständig abgedichteten Balgens (38, 138) aufweist.

3. Regelventil nach Anspruch 2, das ferner Mittel (37, 137) aufweist, um den Ventilkörper (25, 125) in Berührung mit dem vollständig abgedichteten Balgen (38, 138) zu halten.

4. Regelventil nach Anspruch 3, bei welchem die Mittel (37, 137) zum elastischen Andrücken des Ventilkörpers (25, 125) an den vollständig abgedichteten Balgen (38, 138) eine Wendelfeder (37, 137) aufweisen.

5. Regelventil nach Anspruch 4, bei welchem der Ventilkörper (25, 125) eine Kappe aufweist, die eine Bodenwand (26, 126), eine rohrförmige Seitenwand (30, 130) und eine nach außen vorragende ringförmige obere Wand (32, 132) aufweist, wobei die Wendelfeder (37, 137) um die rohrförmige Seitenwand (30, 130) herum angeordnet ist.

6. Regelventil nach Anspruch 5, bei welchem der Durchgang in dem Ventilkörper (25, 125) zumindest einen Schlitz (31, 131) in der rohrförmigen Seitenwand (30, 130) aufweist.

7. Regelventil nach einem der Ansprüche 1 bis 6, bei welchem der Ventilkörper (25, 125) und der Hohlraum (6, 106) Mittel (36, 8, 136, 108) zum Führen des Ventilkörpers (25, 125) aufweisen.

8. Regelventil nach einem der Ansprüche 1 bis 7, bei welchem der ringförmige Ventilsitz (15) mit dem Hohlraumeinlaß (12), der Ventilkörper (25) mit der kalibrierten Öffnung (27) und der vollständig abgedichtete Balgen (38) entlang einer Längsachse (5) ausgerichtet sind, wobei die Einlaßöffnung (2) und die Auslaßöffnung (3) entlang einer Querachse (4) ausgerichtet sind, wobei die Einlaßöffnung (2) in der Querrichtung und direkt stromabwärts des Hohlraumeinlasses (12) in bezug auf die Richtung (16) führt, und wobei die Auslaßöffnung (3) in der Querrichtung zu einer Zone des Hohlraumes (6) des Gehäuses (1) führt, die direkt stromabwärts des ringförmigen Ventilsitzes (15) in bezug auf die Richtung (16) angeordnet ist.

9. Regelventil nach einem der Ansprüche 1 bis 7, bei welchem die Einlaßöffnung (102), der ringförmige Ventilsitz (115) mit dem Hohlraumeinlaß (112), der Ventilkörper (125) mit der kalibrierten Öffnung (127), der vollständig abgedichtete Balgen (138) und die Auslaßöffnung (103) entlang einer Längsachse (105) ausgerichtet sind, und der Ventilkörper (125) sowie der vollständig abgedichtete Balgen (138) innerhalb des Hohlraumes (106) einen Durchgang für die Strömung von Gas von der Einlaßöffnung (102) zur Auslaßöffnung (103) stromabwärts des ringförmigen Ventilsitzes (115) frei lassen, welcher Durchgang in der Größe zumindest gleich dem Durchgang ist, der dem Ventilkörper (25, 125) in der Offenstellung zugeordnet ist.

10. Regelventil nach einem der Ansprüche 1 bis 9, das ferner Mittel (39, 40) zum Einstellen des Druckes des Regelgases in dem vollständig abgedichteten Balgen (38, 138) aufweist.

## Revendications

1. Clapet de commande destiné à être connecté à une conduite pour le passage du GPG en provenance d'une citerne pour fournir une baisse de pression du GPG, si la pression du GPG est inférieure à une valeur de référence et une baisse de pression nettement plus petite si la pression du GPG est supérieure à une valeur de référence, lequel clapet de commande comprend :
- un logement (1, 101) comportant un orifice d'entrée (2, 102) et un orifice de sortie (3, 103), une cavité (6, 106) ayant une entrée (12, 112) de cavité en communication fluide avec l'orifice d'entrée (2, 102) et une sortie (12', 112') de cavité en communication fluide avec l'orifice de sortie (3, 103) et un siège annulaire (15, 115) de clapet positionné à l'intérieur de la cavité (6, 106),
- un corps de clapet (25, 125) disposé de manière mobile à l'intérieur de la cavité (6, 106) entre une position d'étranglement dans laquelle le corps de clapet (25, 125) est pressé contre le siège annulaire (15, 115) de clapet et une position d'ouverture dans laquelle le corps de clapet (25, 125) est éloigné du siège annulaire (15, 115) de clapet,
- des moyens élastiques (38, 138) pour presser le corps de clapet (25, 125) dans la direction du siège annulaire (15, 115) de clapet de telle manière que le corps de clapet (25, 125) occupe la position d'étranglement quand la pression effective du gaz est inférieure à une pression de référence et la position d'ouverture quand la pression effective du gaz est au moins égale à la pression de référence,
**caractérisé en ce que** le siège annulaire (15, 115) de clapet est positionné autour de l'entrée (12, 112) de la cavité, **en ce que** le corps de clapet (25, 125) a un passage avec un trou calibré (27, 127) qui, lorsque le corps de clapet (25, 125) occupe la première position d'étranglement, permet la communication fluide entre l'entrée (12, 112) de la cavité et la sortie (12', 112') de la cavité, et **en ce que** le moyen élastique (38, 138) comprend un soufflet complètement étanche (38, 138) positionné à l'intérieur de la cavité (6, 106), lequel soufflet (38, 138) contient un gaz de commande et peut être déformé longitudinalement et élastiquement, d'un premier état de compression longitudinale qu'il présente quand le corps de clapet (25, 125) occupe la position d'étranglement et dans lequel le gaz de commande a une pression déterminée en fonction de la pression de référence, vers un deuxième état de compression longitudinale qu'il présente quand le corps de clapet (25, 125) occupe la position d'ouverture et dans lequel le soufflet (38, 138) est compressé par une pression du GPG plus élevée.

2. Clapet de commande selon la revendication 1, dans lequel la cavité (6, 106) comprend des moyens (9, 142) pour supporter l'extrémité du soufflet complètement étanche (38, 138) qui n'est pas en contact avec le corps de clapet (25, 125).

3. Clapet de commande selon la revendication 2, qui comprend en outre des moyens (37, 137) pour garder le corps de clapet (25, 125) en contact avec le soufflet complètement étanche (38, 138).

4. Clapet de commande selon la revendication 3, dans lequel le moyen (37, 137) pour presser le corps de clapet (25, 125) élastiquement sur le soufflet complètement étanche (38, 138) est constitué par un ressort hélicoïdal (37, 137).

5. Clapet de commande selon la revendication 4, dans lequel le corps de clapet (25, 125) comprend un chapeau, ayant une paroi de fond (26, 126), une paroi latérale tubulaire (30, 130) et une paroi supérieure annulaire (32, 132) faisant saillie vers l'extérieur, et dans lequel le ressort hélicoïdal (37, 137) est ajusté autour de la paroi latérale tubulaire (30, 130).

6. Clapet de commande selon la revendication 5, dans lequel le passage dans le corps de clapet (25, 125) comprend au moins une fente (31, 131) dans la paroi latérale tubulaire (30, 130).

7. Clapet de commande selon une quelconque des revendications 1 à 6, dans lequel le corps de clapet (25, 125) et la cavité (6, 106) ont les moyens (36, 8, 136, 108) pour guider le corps de clapet (25, 125).

8. Clapet de commande selon une quelconque des revendications 1 à 7, dans lequel le siège annulaire (15) de clapet avec l'entrée (12) de la cavité, le corps de clapet (25) avec le trou calibré (27) et le soufflet complètement étanche (38) sont alignés suivant un axe longitudinal (5), dans lequel l'orifice d'entrée (2) et l'orifice de sortie (3) sont alignés suivant un axe transversal (4), dans lequel l'orifice d'entrée (2) débouche transversalement et directement en amont de l'entrée (12) de la cavité en référence au sens (16) et dans lequel l'orifice de sortie (3) débouche transversalement dans une zone de la cavité (6) du logement (1) placée directement en aval du siège annulaire (15) de clapet en référence au sens (16).

9. Clapet de commande selon une quelconque des revendications 1 à 7, dans lequel l'orifice d'entrée (102), le siège annulaire (115) de clapet avec l'entrée (112) de la cavité, le corps de clapet (125) avec le trou calibré (127), le soufflet complètement étanche (138) et l'orifice de sortie (103) sont alignés suivant un axe longitudinal (105) et dans lequel le corps de clapet (125) et le soufflet étanche (138) laissent dégagé à l'intérieur de la cavité (106) un passage pour l'écoulement du gaz de l'orifice d'entrée (102) à l'orifice de sortie (103), en aval du siège annulaire (115) de clapet, lequel passage est au moins égal en taille au passage qui est associé au corps de clapet (25, 125) qui est dans la position d'ouverture.

10. Clapet de commande selon une quelconque des revendications 1 à 9, qui comprend en outre des moyens (39, 40) pour ajuster la pression du gaz de commande dans le soufflet complètement étanche (38, 138).
